(19) Europäisches Patentamt
European Patent Office
Office européen des brevets

(11) **EP 1 568 576 B1**

(12) **EUROPÄISCHE PATENTSCHRIFT**

(45) Veröffentlichungstag und Bekanntmachung des Hinweises auf die Patenterteilung:
**30.12.2009 Patentblatt 2009/53**

(51) Int Cl.:
***B62D 6/00*** *(2006.01)* ***B62D 5/00*** *(2006.01)*

(21) Anmeldenummer: **05001538.7**

(22) Anmeldetag: **26.01.2005**

(54) **Lenksystem für ein Kraftfahrzeug und Verfahren zum Betrieb des Lenksystems**

Steering system for a motor vehicle and method of operating the steering system

Système de direction et procédé pour la commande du système de direction

(84) Benannte Vertragsstaaten:
**DE FR GB IT SE**

(30) Priorität: **28.02.2004 DE 102004009815**

(43) Veröffentlichungstag der Anmeldung:
**31.08.2005 Patentblatt 2005/35**

(73) Patentinhaber: **ZF Lenksysteme GmbH**
**73527 Schwäbisch Gmünd (DE)**

(72) Erfinder:
• **Reimann, Gerd**
**74232 Abstatt (DE)**
• **Reinelt, Wolfgang, Dr.**
**73525 Schwäbisch Gmünd (DE)**
• **Klier, Willy**
**73527 Schwäbisch Gmünd (DE)**
• **Schuster, Wolfgang**
**73453 Abtsgmünd (DE)**

(56) Entgegenhaltungen:
EP-A- 1 380 492    EP-A- 1 508 503
WO-A-02/36410    DE-A1- 10 325 484
US-B1- 6 226 579

EP 1 568 576 B1

**Beschreibung**

Stand der Technik

Die vorliegende Erfindung betrifft ein Lenksystem eines Kraftfahrzeugs. Das Lenksystem umfasst eine Lenkhandhabe zur Vorgabe eines Lenkradwinkels als Maß für einen gewünschten Lenkwinkel für mindestens ein lenkbares Rad des Kraftfahrzeugs. Außerdem umfasst das Lenksystem Überlagerungsmittel zum Generieren eines Zusatzwinkels und zur Überlagerung des Lenkradwinkels mit dem Zusatzwinkel. Der sich aus der Überlagerung ergebende Winkel wird als Ritzelwinkel bezeichnet. Schließlich umfasst das Lenksystem ein Lenkgetriebe zur Umsetzung des Ritzelwinkels in einen korrigierten Lenkwinkel für das mindestens eine lenkbare Rad des Kraftfahrzeugs.

Außerdem betrifft die Erfindung ein Verfahren zum Betrieb eines Lenksystems eines Kraftfahrzeugs. Dabei wird mittels einer Lenkhandhabe ein Lenkradwinkel als Maß für einen gewünschten Lenkwinkel für mindestens ein lenkbares Rad des Kraftfahrzeugs vorgegeben. Außerdem wird ein Zusatzwinkel generiert und zur Ermittlung eines Ritzelwinkels dem Lenkradwinkel überlagert. Schließlich wird der Ritzelwinkel in einen korrigierten Lenkwinkel für das mindestens eine lenkbare Rad des Kraftfahrzeugs umgesetzt.

Schließlich betrifft die vorliegende Erfindung ein Computerprogramm, das auf einem Rechengerät, insbesondere auf einem Mikroprozessor, eines Steuergeräts für ein Lenksystem eines Kraftfahrzeugs ablauffähig ist.

Ein Lenksystem der eingangs genannten Art mit Überlagerungsmitteln ist beispielsweise aus der DE 40 31 316 A1 bekannt. Mit Hilfe der Überlagerungsmittel ist es möglich, einen von der Lenkhandhabe vorgegebenen Lenkradwinkel zur Erhöhung der Fahrstabilität und/ oder des Komforts mit einem Zusatzwinkel zu überlagern, so dass sich fahrdynamikabhängig und/ oder komfortabhängig ein variables Übersetzungsverhältnis zwischen Lenkradwinkel und Ritzelwinkel einstellt. Dadurch ist es sicherheitstechnisch möglich, ein Kraftfahrzeug, das droht auszubrechen, durch eine entsprechende Korrektur des Lenkwinkels wieder in eine stabile Fahrsituation zurückzuführen. Die Überlagerungsmittel können Fahrdynamikmittel des Kraftfahrzeugs (z. B. ein elektronisches Stabilitätsprogramm (ESP), ein Antiblokkiersystem (ABS), eine Antriebsschlupfregelung (ASR), etc.) unterstützen. Dabei handelt es sich beispielsweise um eine Gierratenregelung, bei der über das Lenksystem korrigierend auf die Fahrdynamik des Kraftfahrzeugs eingegriffen wird, um die Gierrate auf einen vorgebbaren Wert zu regeln und um dadurch ein Ausbrechen des Fahrzeugs zu vermeiden. Komforttechnisch ist es durch das variabel wählbare Übersetzungsverhältnis beispielsweise möglich, bei niedrigen Fahrzeuggeschwindigkeiten (z. B. beim Rangieren des Kraftfahrzeugs) eine relativ kleines Übersetzungsverhältnis einzustellen, das heißt eine Drehung der Lenkhandhabe um einen bestimmten Drehwinkel führt zu einem relativ großen Lenkwinkel der Räder. Dagegen kann bei hohen Fahrzeuggeschwindigkeiten (z. B. bei schneller Autobahnfahrt) ein relativ großes Übersetzungsverhältnis eingestellt werden, das heißt eine Drehung der Lenkhandhabe um einen bestimmten Drehwinkel führt zu einem relativ kleinen Lenkwinkel der Räder, so dass sich die Fahrstabilität des Kraftfahrzeugs erhöht. Insgesamt kann durch Lenksysteme der eingangs genannten Art mit Überlagerungsmitteln die Handhabbarkeit eines damit ausgestatten Kraftfahrzeugs deutlich verbessert werden.

Ein Lenksystem der eingangs genannten Art ist beispielsweise auch aus der DE 100 13 711 A1 bekannt. Dort ist ein Lenksystem beschrieben, das außer den genannten Merkmalen auch einen Servoantrieb zur Momentenunterstützung aufweist. Der Servoantrieb kann elektrisch oder hydraulisch arbeiten. Der Grad der Momentenunterstützung kann abhängig von der Fahrgeschwindigkeit des Kraftfahrzeugs gewählt werden. Während bei langsamer Fahrgeschwindigkeit die Momentenunterstützung größer ist (zum Beispiel um beim Rangieren des Fahrzeugs das Lenkrad ohne großen Kraftaufwand betätigen zu können), ist die Momentenunterstützung bei höheren Geschwindigkeiten (zum Beispiel um die Fahrstabilität bei einer Autobahnfahrt zu erhöhen) deutlich kleiner. Auch das erfindungsgemäße Lenksystem kann einen Servoantrieb aufweisen. Die Erfindung ist aber auch für solche Lenksysteme von Bedeutung, die keinen Servoantrieb aufweisen.

Gemäss dem Oberbegriff der unabhängigen Ansprüche 1, 11 und 13 offenbart Die US 6, 226, 579 B1 ein Lenksystem für ein Kraftfahrzeug mit wenigstens einem lenkbaren Rad, einem Stellantrieb und einem Überlagerungsgetriebe. Durch das Überlagerungsgetriebe werden die durch den Fahrer des Fahrzeugs initiierte Lenkbewegung und die durch den Stellantrieb initiierte Bewegung zur Erzeugung der Lenkbewegung des lenkbaren Rades überlagert. Dabei werden wenigstens zwei Lenkanteile gebildet und ein Steuersignal zur Ansteuerung des Stellantriebs durch eine Überlagerung der gebildeten Lenkanteile erzeugt. Die Lenkanteile werden parallel und unabhängig voneinander gebildet. Die Erfindung ermöglicht, mehrere Funktionen zur Beeinflussung des Fahrverhaltens vorteilhafterweise zu kombinieren. Hierdurch wird eine Verbesserung der Fahrdynamik mittels Lenkeingriffe erzielt.

Der vorliegenden Erfindung liegt die Aufgabe zugrunde, die Handhabbarkeit von Kraftfahrzeugen, die mit Lenksystemen der eingangs genannten Art ausgestattet sind, weiter zu verbessern.

Diese Aufgabe wird erfindungsgemäß durch die in Anspruch 1 genannten Merkmale gelöst. Die Aufgabe wird bezüglich des Verfahrens durch die in Anspruch 11 genannten Merkmale gelöst.

Vorteile der Erfindung

Erfindungsgemäß wird also vorgeschlagen, die aktuelle Fahrsituation des Kraftfahrzeugs oder aber auch Fahrsituationen zu bereits vergangenen Zeitpunkten zur Ermittlung des Zusatzwinkels heranzuziehen. Da das Übersetzungsverhältnis (die sogenannte Lenkübersetzung) zwischen Lenkhandhabe und Ritzel des Lenkgetriebes von der Größe des Zusatzwinkels abhängig ist, wird also das Übersetzungsverhältnis in Abhängigkeit von der Fahrsituation variiert. Die Fahrsituation eines Kraftfahrzeugs kann beispielsweise in eine "sportliche" und eine "zurückhaltende" Fahrweise unterteilt sein. Selbstverständlich kann eine beliebig große Anzahl an unterschiedlichen Fahrsituationen für ein Kraftfahrzeug definiert werden. Die aktuelle Fahrsituation des Kraftfahrzeugs kann anhand von einer oder mehreren geeigneten Betriebsgrößen des Kraftfahrzeugs, wie beispielsweise Raddrehzahl, Fahrzeugbeschleunigung, Häufigkeit und Intensität (Geschwindigkeit, Beschleunigung) einer Betätigung von Gaspedal und Bremspedal, Intensität (Geschwindigkeit, Beschleunigung) einer Betätigung der Lenkhandhabe (beispielsweise erfasst über die Lenkradwinkelgeschwindigkeit), ermittelt werden. Mit dem erfindungsgemäßen Lenksystem kann die Lenkung in bestimmten Fahrsituationen agiler, d. h. direkter oder "giftiger", und in anderen Situationen träger, d. h. indirekter oder gutmütiger, eingestellt werden. Abgesehen von dem höheren Fahrspaß, kann dadurch auch ein deutlicher Sicherheitsgewinn erzielt werden. Erfindungsgemäß wird zudem vorgeschlagen, dass die Überlagerungsmittel den Zusatzwinkel in Abhängigkeit von einer nicht-linearen Lenkkinematik des Lenkgetriebes generieren. Dazu wird im Vorfeld die Lenkkinematik ermittelt und zumindest deren nicht-linearen Anteile bei der Ermittlung der Lenkübersetzung berücksichtigt. Nichtlinearitäten der Lenkkinematik haben ihre Ursache beispielsweise darin, dass das Lenkgetriebe keine konstante Verzahnung zwischen dem Ritzel und einer Zahnstange aufweist. Außerdem arbeiten in dem Lenkgetriebe verschiedene Hebel, die dazu führen, dass je größer der Hub der Zahnstange des Lenkgetriebes ist, desto größer auch der Lenkwinkel der Räder ist. Dieses Prinzip ist aus der Praxis bekannt, wo kurz vor dem Endanschlag der Lenkung bereits eine geringe Drehung des Lenkrads zu einem relativ großen Einschlag der Räder führt. Durch die Berücksichtigung der Lenkkinematik zwischen Ritzelwinkel und Lenkwinkel kann die Lenkübersetzung nicht nur zwischen Lenkhandhabe und Ritzel, sondern sogar zwischen Lenkhandhabe und Lenkwinkel der Räder vorgegeben werden. Dadurch ist es möglich, die Lenkübersetzung des Lenksystems derart einzustellen, dass eine Betätigung der Lenkhandhabe um einen bestimmten Weg zu einem vorgebbaren Einschlag der lenkbaren Räder führt.

Obwohl die Fahrsituation anhand von beliebigen Betriebsgrößen des Kraftfahrzeugs ermittelt werden kann, wird gemäß einer vorteilhaften Weiterbildung der vorliegenden Erfindung vorgeschlagen, dass das Lenksystem Mittel zur Ermittlung der Fahrsituation des Kraftfahrzeugs anhand einer die Drehzahl von mindestens einem Rad des Kraftfahrzeugs charakterisierenden Größe. Anhand der Drehzahl der Räder lässt sich auf einfache und kostengünstige Weise eine zuverlässige und aussagekräftige Aussage über die Fahrsituation treffen. Die Mittel sind beispielsweise als im Bereich der Fahrzeugräder montierte Drehzahlsensoren ausgebildet. Zur Realisierung der Erfindung können bereits für andere Zwecke (z. B. für Fahrdynamikmittel, Elektronische Stabilitätsregelung (ESR), Antiblockiersystem (ABS), etc.) vorgesehene Drehzahlsensoren eingesetzt werden. Es können aber auch eigene Drehzahlsensoren an einem oder mehreren Rädern des Fahrzeugs vorgesehen werden. Die Informationen über die Drehzahl der Räder können noch durch andere Betriebsgrößen ergänzt werden, um die Zuverlässigkeit der Detektion einer Fahrsituation und die Aussagekraft der detektierten Fahrsituation zu verbessern.

Gemäß einer bevorzugten Ausführungsform der Erfindung wird vorgeschlagen, dass die Überlagerungsmittel den Zusatzwinkel in Abhängigkeit von einer den Lenkradwinkel charakterisierenden Größe generieren. Zusätzlich zu der Fahrsituation des Kraftfahrzeugs kann die Lenkübersetzung also auch in Abhängigkeit von dem Winkel der Lenkhandhabe variiert werden. Statt des Lenkradwinkels kann auch der Winkel des Ritzels des Lenkgetriebes oder eine beliebig andere, den Lenkradwinkel charakterisierende Größe, herangezogen werden.

Gemäß noch einer bevorzugten Ausführungsform der Erfindung wird vorgeschlagen, dass die Überlagerungsmittel den Zusatzwinkel in Abhängigkeit von einer die Drehgeschwindigkeit der Lenkhandhabe charakterisierenden Größe generieren. Zusätzlich zu der Fahrsituation des Kraftfahrzeugs kann die Lenkübersetzung also auch in Abhängigkeit von der Änderung des Lenkradwinkels pro Zeiteinheit (von der ersten Ableitung des Lenkradwinkels) variiert werden. Statt der Drehgeschwindigkeit der Lenkhandhabe kann auch die Drehgeschwindigkeit des Ritzels des Lenkgetriebes oder eine beliebig andere, die Drehgeschwindigkeit der Lenkhandhabe charakterisierende Größe, herangezogen werden. Durch die Berücksichtigung der Drehgeschwindigkeit der Lenkhandhabe oder des Ritzelwinkels wird die Dynamik zwischen Lenkhandhabe und lenkenden Vorderrädern berücksichtigt. Es wird nicht nur ein statischer Endwert berücksichtigt, sondern auch wie schnell dieser Endwert erreicht wird. Bei der Berücksichtigung der Drehgeschwindigkeit kann die Robustheit des Lenksystems gegenüber fehlerhaften Berechnungen verbessert werden, da diese zu Sprüngen der Lenkübersetzung führen können, wenn nur die Winkelwerte berücksichtigt werden. Werden jedoch die Geschwindigkeiten der im dem Lenksystem auftretenden Winkel berücksichtigt, führen solche Fehler lediglich zu einem relativ sanften Ansteigen oder Abfallen der Lenkübersetzung.

Selbstverständlich ist es möglich die Lenkübersetzung außer in Abhängigkeit von der Fahrsituation des Kraftfahrzeugs auch in Abhängigkeit von mehreren der oben genannten zusätzlich angeführten Kriterien zu variieren.

Gemäß einer anderen vorteilhaften Weiterbildung der Erfindung wird vorgeschlagen, dass das Lenksystem Mittel zur Ausführung einer durch Filterkoeffizienten definierten Filterung der zur Ermittlung der Fahrsituation des Kraftfahrzeugs herangezogenen Größen, der den Ritzelwinkel charakterisierenden Größe und/ oder der die Drehgeschwindigkeit der Lenkhandhabe charakterisierenden Größe aufweist, wobei die Filterkoeffizienten in Abhängigkeit von dynamischen Eigenschaften des Kraftfahrzeugs fahrzeugspezifisch vorgebbar sind. Durch die Filterung der Signale der Eingangsgrößen werden durch Signalstörungen verursachte Spitzen (sogenannte Peaks) der Signale reduziert und Fehler außerhalb eines Nutzbereichs herausgefiltert. Fehler innerhalb des Nutzbereichs werden dagegen nicht herausgefiltert. Die Erstreckung des Nutzbereichs wird durch die Filterkoeffizienten beeinflusst. Durch eine entsprechende Anpassung der Filterkoeffizienten an die dynamischen Eigenschaften des jeweiligen Kraftfahrzeugs wird sichergestellt, dass das Filter stets in dem Nutzbereich arbeitet. Würden beispielsweise die Eingangsgrößen eines sehr schnellen Fahrzeugs mit einem auf ein langsames Fahrzeug ausgerichteten Filter gefiltert werden, würde das Filter bei Ausschöpfung des vollen dynamischen Vermögens des Fahrzeugs unter Umständen außerhalb des Nutzbereichs arbeiten. Die Folge wäre, dass die Signale der Eingangsgrößen möglicherweise nicht optimal gefiltert würden und dass sogar in an sich fehlerfreien Signalen Fehler detektiert werden.

Gemäß einer bevorzugten Ausführungsform der Erfindung wird vorgeschlagen, dass das Lenksystem Mittel zur Detektion eines Fehlers der zur Ermittlung der Fahrsituation des Kraftfahrzeugs herangezogenen Größen, der den Ritzelwinkel charakterisierenden Größe und/ oder der die Drehgeschwindigkeit der Lenkhandhabe charakterisierenden Größe aufweist, wobei im Falle der Detektion eines Fehlers statt der fehlerhaften Größe eine vorgebbare Ersatzgröße zum Generieren des Zusatzwinkels herangezogen wird. Erfindungsgemäß werden also die Signale der Eingangsgrößen überwacht und im Fehlerfall statt der Eingangsgröße eine Ersatzgröße zum Bestimmen der Lenkübersetzung herangezogen. Die Überwachung der Signale der Eingangsgrößen kann eine Plausibilitätsprüfung, eine Gradientenüberwachung und beliebig andere Arten der Überwachung umfassen. Die Ersatzgröße kann eine künstliche, sichere Größe. Sie kann zeitlich konstant, aber auch variabel sein.

Gemäß einer weiteren bevorzugten Ausführungsform der Erfindung wird vorgeschlagen, dass die Mittel zur Detektion eines Fehlers der zur Ermittlung der Fahrsituation des Kraftfahrzeugs herangezogenen Größen, der den Ritzelwinkel charakterisierenden Größe und/ oder der die Drehgeschwindigkeit der Lenkhandhabe charakterisierenden Größe im Falle der Detektion einer fehlerfreien Größe statt der Ersatzgröße wieder die fehlerfreie Größe zum Generieren des Zusatzwinkels herangezogen wird. Erfindungsgemäß werden also die Signale der Eingangsgrößen weiter beobachtet und von einer Ersatzgröße wieder auf entsprechende Eingangsgröße umgeschaltet, falls das Signal der Eingangsgröße wieder fehlerfrei ist.

Vorteilhafterweise umfassen die Überlagerungsmittel einen Elektromotor zum Generieren des Zusatzwinkels und ein Überlagerungsgetriebe zum Überlagern des Lenkradwinkels mit dem Zusatzwinkel, wobei der Motor im Bereich eines Anschlags des Lenkgetriebes einer vorgebbaren Funktion folgend auf Null gefahren wird. Auf diese Weise kann eine sogenannte Soft-Stop-Funktion realisiert werden, bei der die Lenkung kurz vor Erreichen eines Endanschlags des Lenkgetriebes oder eines beliebig anderen Endanschlags sanft abgebremst wird. Das Abbremsen kann bis zum Stillstand der Lenkung gehen, so dass auf diese Weise gewissermaßen ein virtueller elektronischer Endanschlag realisiert werden könnte, der noch vor dem mechanischen Anschlag angeordnet ist. Das erlaubt einen besonders schonenden Betrieb des Lenksystems.

Es wird des weiteren vorgeschlagen, dass das Lenksystem einen Servoantrieb zur Momentenunterstützung aufweist. Vorzugsweise ist der Grad der Momentenunterstützung von der Fahrgeschwindigkeit des Kraftfahrzeugs abhängig.

Gemäß einer vorteilhaften Weiterbildung der vorliegenden Erfindung wird vorgeschlagen, dass der Ritzelwinkel von einem Lenkgetriebe in den korrigierten Lenkwinkel für das mindestens eine lenkbare Rad des Kraftfahrzeugs umgesetzt wird und dass der Zusatzwinkel in Abhängigkeit von einer die Drehgeschwindigkeit der Lenkhandhabe charakterisierenden Größe generiert wird.

Von besonderer Bedeutung ist die Realisierung des erfindungsgemäßen Verfahrens in der Form eines Computerprogramms. Dabei ist das Computerprogramm auf einem Rechengerät, insbesondere auf einem Mikroprozessor, ablauffähig und zur Ausführung des erfindungsgemäßen Verfahrens geeignet. In diesem Fall wird also die Erfindung durch das Computerprogramm realisiert, so dass dieses Computerprogramm in gleicher Weise die Erfindung darstellt wie das Verfahren, zu dessen Ausführung das Computerprogramm programmiert ist. Das Computerprogramm ist vorzugsweise auf einem Speicherelement abgespeichert. Als Speicherelement kann insbesondere ein elektrisches Speichermedium zur Anwendung kommen, beispielsweise ein Random-Access-Speicher, ein Read-Only-Speicher oder ein Flash-Speicher. Das Speicherelement kann aber auch als ein magnetisches Speichermedium (z. B. Diskette, Festplatte, Speicherband) oder optisches Speichermedium (z. B. DVD, CD-ROM, etc.) ausgebildet sein.

Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Es zeigen:

Figur 1 ein erfindungsgemäßes Lenksystem gemäß einer bevorzugten Ausführungsform;

Figur 2 ein Blockschaltbild einer Funktion zur Variation der Lenkübersetzung zwischen Lenkhandhabe und lenkbaren Rädern des Lenksystems aus Figur 1 als Bestandteil eines erfindungsgemäßen Verfahrens gemäß einer bevorzugten Ausführungsform;

Figur 3 ein Kennfeld gemäß einer bevorzugten Ausführungsform, zur Ermittlung einer gewünschten Lenkübersetzung, wie es in der Funktion gemäß Figur 2 eingesetzt wird;

Figur 4 ein Blockschaltbild einer Funktion zur Aufbereitung von Eingangssignalen der Funktion zur Variation der Lenkübersetzung gemäß Figur 2;

Figur 5 ein Blockschaltbild einer Funktion zur Aufbereitung des Eingangssignals Lenkradwinkel der Funktion zur Signalaufbereitung gemäß Figur 4;

Figur 6 ein Blockschaltbild einer Funktion zur Aufbereitung des Eingangssignals Fahrzeuggeschwindigkeit der Funktion zur Signalaufbereitung gemäß Figur 4;

Figur 7 ein Blockschaltbild einer Funktion zur Aufbereitung des Eingangssignals Ritzelwinkel der Funktion zur Signalaufbereitung gemäß Figur 4;

Figur 8 ein Blockschaltbild einer Funktion zur Ermittlung eines gewünschten Übersetzungsverhältnisses der Funktion zur Variation der Lenkübersetzung gemäß Figur 2;

Figur 9 ein Blockschaltbild einer Funktion zur Ermittlung eines Sollwinkels für den Motor der Überlagerungsmittel in Bezug auf den Ritzelwinkel der Funktion zur Variation der Lenkübersetzung gemäß Figur 2;

Figur 10 ein Blockschaltbild einer Funktion zur Ermittlung eines gültigen Sollwinkels für den Motor der Überlagerungsmittel der Funktion zur Ermittlung eines Sollwinkels gemäß Figur 9; und

Figur 11 ein Blockschaltbild eines Untersystems mit kundenspezifisch applizierbaren Parametern der Funktion zur Variation der Lenkübersetzung gemäß Figur 2.

Beschreibung der Ausführungsbeispiele

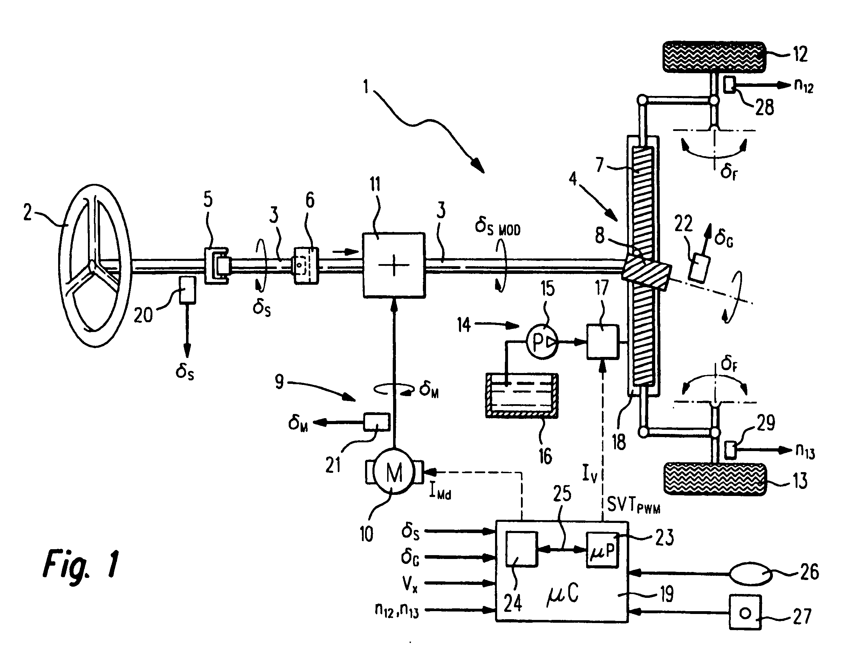

In Figur 1 ist ein erfindungsgemäßes Lenksystem eines Kraftfahrzeugs in seiner Gesamtheit mit dem Bezugszeichen 1 bezeichnet. Das Lenksystem 1 umfasst eine Lenkhandhabe 2, die beispielsweise als ein Lenkrad, als eine Lenkstange oder als Lenkknüppel ausgebildet sein kann. Die Lenkhandhabe 2 steht über eine Gelenkwelle 3 mit einem Lenkgetriebe 4 in Verbindung. Die Gelenkwelle 3 ist je nach Ausführungsform des Lenksystems 1 durch ein oder mehrere Kardangelenke 5, 6 unterbrochen. Das Lenkgetriebe 4 dient dazu, einen Drehwinkel der Gelenkwelle 3 in einen Lenkwinkel $\delta\_F$ von zu lenkenden Rädern 12, 13 des Kraftfahrzeugs umzusetzen. Das Lenkgetriebe 4 umfasst in der in Figur 1 dargestellten Ausführungsform eine Zahnstange 7 und ein Ritzel 8, an das die Gelenkwelle 3 angreift. Das Lenksystem 1 weist außerdem Überlagerungsmittel 9 auf, die einen Elektromotor 10 und ein von diesem angetriebenes Überlagerungsgetriebe 11 in Form eines Planetengetriebes umfassen.

Durch die Lenkhandhabe 2 wird ein Lenkradwinkel $\delta\_S$ als Maß für einen gewünschten Lenkwinkel $\delta\_F$ der lenkbaren Räder 12, 13 des Kraftfahrzeugs vorgegeben. Mit Hilfe des Motors 10 der Überlagerungsmittel 9 kann ein Zusatzwinkel $\delta\_M$ generiert und dem Lenkradwinkel $\delta\_S$ mittels des Überlagerungsgetriebes 11 überlagert werden. Der Zusatzwinkel $\delta\_M$ wird zur Verbesserung der Fahrdynamik des Kraftfahrzeugs und/ oder des Komforts generiert. Der Summenwinkel von Lenkradwinkel $\delta\_S$ und Zusatzwinkel $\delta\_M$ wird als Ritzelwinkel $\delta\_G$ bezeichnet.

Im Bereich des Lenkgetriebes 4 ist ein Servoantrieb 14 angeordnet, der zur Momentenunterstützung dient. Der Servoantrieb 14 umfasst eine Hydraulikpumpe 15, die eine Hydraulikflüssigkeit aus einem Vorratsbehälter 16 über ein Hydraulikventil 17 in das Lenkgetriebe 4 fördert. Das Hydraulikventil 17 ist elektromagnetisch oder über einen Piezoaktor betätigbar. In der Regel umfasst ein Servoantrieb 14 mehrere Hydraulikventile 17, von denen in Figur 1 aber nur eines dargestellt ist. Genauer gesagt, sind die Lenkstange 7 und das Ritzel 8 in einem Gehäuse 18 des Lenkgetriebes 4 angeordnet. Über das Hydraulikventil 17 wird der Fluss der Hydraulikflüssigkeit in das Gehäuse 18 an das eine oder das andere Ende der Lenkstange 7 gesteuert, und so eine Momentenunterstützung in die eine oder andere Richtung bewirkt. Über die Menge und damit den Druck der in das Gehäuse 18 des Lenkgetriebes 4 geförderten Hydraulikflüssigkeit kann die Stärke der Momentenunterstützung variiert werden. Statt des dargestellten hydraulischen Servoantriebs 14 kann auch ein elektrischer Servoantrieb vorgesehen werden. Die vorliegende Erfindung hat die angegebenen Vorteile aber auch bei Lenksystemen 1, die keinen Servoantrieb 14 aufweisen.

Das Lenksystem 1 verfügt außerdem über ein Steuergerät 19, das unter anderem zur Ansteuerung des Motors 10 der Überlagerungsmittel 9 und des Hydraulikventils 17 des Servoantriebs 14 dient. Dazu wird der Motor 10 mit einem Ansteuersignal I_Md und das Hydraulikventil mit einem Ansteuersignal I_V beaufschlagt. In dem vorliegenden Ausführungsbeispiel wird das Hydraulikventil 17 derart angesteuert, dass sich in Abhängigkeit von der Fahrgeschwindigkeit V_x des Kraftfahrzeugs eine variable Momentenunterstützung eingestellt. So ist es beispielsweise möglich, bei niedrigen Fahrgeschwindigkeiten V_x eine hohe Momentenunterstützung zu wählen, um das Rangieren des Fahrzeugs zu erleichtern, und bei hohen Geschwindigkeiten V_x (z. B. bei zügiger Überland- oder Autobahnfahrt) eine niedrige Momentenunterstützung einzustellen, um eine fahrdynamisch besonders stabile Lenkung des Fahrzeugs zu ermöglichen.

In dem dargestellten Ausführungsbeispiel erfolgt die Ansteuerung des Motors 10 der Überlagerungsmittel 9 unter anderem in Abhängigkeit von einer Fahrsituation des Kraftfahrzeugs. Es wird also vorgeschlagen, die Lenkübersetzung zwischen dem Lenkradwinkel $\delta$_S der Lenkhandhabe 2 und dem Ritzelwinkel $\delta$_G des Ritzels 8 des Lenkgetriebes 4 bzw. einem Lenkwinkel $\delta$_F der lenkbaren Räder 12, 13 in Abhängigkeit von der Fahrsituation zu variieren. Als Fahrsituation finden im Sinne der vorliegenden Erfindung beliebige Fahrsituationen eines Kraftfahrzeugs ausgenommen der Fahrzeuggeschwindigkeit V_x alleine betrachtet Berücksichtigung. Selbstverständlich werden aber auch solche Fahrsituationen berücksichtigt, die unter anderem auch abhängig sind von der Fahrzeuggeschwindigkeit V_x. Eine Fahrsituation im Sinne der vorliegenden Erfindung wird also nicht allein durch eine isolierte Betriebsgröße des Kraftfahrzeugs, beispielsweise allein durch die Fahrzeuggeschwindigkeit V_x, sondern vielmehr durch ein Zusammenspiel mehrerer unterschiedlicher Betriebsgrößen bestimmt, von denen die Fahrzeuggeschwindigkeit V_x eine sein kann. Diese Betriebsgrößen werden zumindest teilweise ermittelt, analysiert und ausgewertet, um die konkrete Fahrsituation des Kraftfahrzeugs möglichst zuverlässig und detailliert zu ermitteln.

Zur Variation der Lenkübersetzung wird der Motor 10 der Überlagerungsmittel 9 derart angesteuert, dass er den Zusatzwinkel $\delta$_M fahrsituationsabhängig generiert. Zur Variation der Lenkübersetzung können die aktuelle Fahrsituation des Kraftfahrzeugs oder aber auch Fahrsituationen zu bereits vergangenen Zeitpunkten berücksichtigt werden. Die Fahrsituation eines Kraftfahrzeugs kann beispielsweise in eine "sportliche" und eine "zurückhaltende" Fahrweise unterteilt sein. Selbstverständlich kann eine beliebig große Anzahl an unterschiedlichen Fahrsituationen für ein Kraftfahrzeug definiert werden, wobei jeder Fahrsituation eine optimale Lenkübersetzung zugeordnet ist, die dann fahrsituationsabhängig eingestellt wird.

Von besonderem Interesse bei der Variation der Lenkübersetzung ist erfindungsgemäß die Fahrdynamik, die sich in kritischen Fahrsituation ergibt. Die Fahrdynamik wird beispielsweise durch den Reifen-Fahrbahnkontakt, die Eigenschaften des Fahrwerks, Fahrzeuggeometrien und Masseverteilungen, Lenk- und Bremseingriff und elektronische Fahrdynamiksysteme beeinflusst. Beispiele für Fahrsituationen eines Kraftfahrzeugs sind Schleudern, Notbremsen, abruptes Ausweichen, Überschlag, Seitenneigung bei Kurvenfahrt, Eintauchen beim Beschleunigen oder Abbremsen und Radschlupf.

Die aktuelle Fahrsituation des Kraftfahrzeugs kann beispielsweise anhand von die Fahrdynamik des Fahrzeugs charakterisierenden Größen ermittelt werden, insbesondere anhand von dem Lenkradwinkel $\delta$_S, einer Querbeschleunigung des Fahrzeugs, einer Längsbeschleunigung/ -verzögerung des Fahrzeugs, einer Giergeschwindigkeit des Fahrzeugs und einem Schwimm- und Wankwinkel des Fahrzeugs. Außerdem kann die Fahrsituation anhand einer oder mehreren geeigneten Betriebsgrößen des Kraftfahrzeugs, wie beispielsweise

Raddrehzahl n, Fahrzeugbeschleunigung $\dot{V}_x$, Häufigkeit und Intensität (Geschwindigkeit, Beschleunigung) einer Betätigung von Gaspedal und Bremspedal, Intensität (Geschwindigkeit, Beschleunigung) einer Betätigung der Lenkhandhabe 2 (beispielsweise erfasst über die Lenkradwinkelgeschwindigkeit $\dot{\delta}_s$) oder Ritzelwinkel $\delta$_G, ermittelt werden. Zusätzliche Informationen können zur Ermittlung einer bestimmten Fahrsituation als Redundanz zur Überprüfung anderer Messwerte herangezogen werden: Längs- und Querbeschleunigung des Fahrzeugs, Lenkwinkel $\delta$_S, Schräglaufwinkel an allen Fahrzeugrädern, Sturz- und Nickwinkel des Fahrzeugs und Lenkradmoment.

Ein wichtiger Aspekt der vorliegenden Erfindung ist darin zu sehen, dass im Falle einer kritischen Fahrsituation des Fahrzeugs der Zusatzwinkel $\delta$_M nicht generiert und dem Lenkradwinkel $\delta$_S überlagert wird, damit die Fahrsituation automatisch wieder stabilisiert wird (z. B. um andere Fahrdynamikmittel des Fahrzeugs automatisch zu unterstützen). Vielmehr geht es erfindungsgemäß darum, dem Fahrer in jeder denkbaren Fahrsituation die optimale Lenkübersetzung zur Verfügung zu stellen, um unter Komfort- und Sicherheitsgesichtspunkten die best mögliche Beherrschbarkeit des Fahrzeugs durch den Fahrer zu erzielen. Bei der vorliegenden Erfindung müsste der Fahrer also im Falle einer kritischen Fahrsituation des Fahrzeugs selbst mittels des Lenksystems 1 entsprechend korrigierend und fahrzeugstabilitätserhöhend eingreifen, um das Fahrzeug wieder in eine sichere Fahrsituation zu überführen. Dabei wird ihm jedoch die optimale Lenkübersetzung zur Verfügung gestellt.

Die aktuelle Fahrsituation kann in einem Speicher abgelegt und zu späteren Zeitpunkten als Fahrsituation zu einem vergangen Zeitpunkt (beispielsweise zu einem vorangegangen Rechentakt) aufgerufen werden. Mit dem erfindungsgemäßen Lenksystem 1 kann die Lenkung in bestimmten Fahrsituationen agiler, d. h. direkter oder "giftiger", und in anderen Situationen träger, d. h. indirekter oder gutmütiger, eingestellt werden. Abgesehen von dem höheren Fahrspaß, kann dadurch auch ein deutlicher Sicherheitsgewinn erzielt werden.

Obwohl die Fahrsituation des Fahrzeugs anhand von beliebigen Betriebsgrößen des Kraftfahrzeugs ermittelt werden kann, wird vorgeschlagen, dass das Lenksystem 1 Drehzahlsensoren 28, 29 zur Ermittlung der Drehzahl n_12 und n_13 der lenkbaren Räder 12, 13 und vorzugsweise auch der anderen Räder des Fahrzeugs aufweist. Anhand der Drehzahl n_12, n_13 der Räder 12, 13 lässt sich auf einfache und kostengünstige Weise eine zuverlässige und aussagekräftige Aussage über die Fahrsituation treffen. Statt der oder zusätzlich zu den Drehzahlsensoren 28, 29 können auch Sensoren von bereits an Bord des Fahrzeugs befindlichen Fahrdynamiksystemen, beispielsweise von einem elektronischen Stabilitätsprogramm (ESP) oder einem Bremsassistenten, zur Detektion einer bestimmten Fahrsituation des Fahrzeugs eingesetzt werden. Darüber hinaus verfügt das Lenksystem 1 über geeignete Drehwinkelsensoren 20, 21, 22, welche den Lenkradwinkel $\delta\_S$, den Zusatzwinkel $\delta\_M$ und den Ritzelwinkel $\delta\_G$ messen. Das erfindungsgemäße Lenksystem 1 muss nicht immer alle dargestellten Drehwinkelsensoren 20, 21, 22 aufweisen. Es ist durchaus denkbar, dass einer der Winkel nicht benötigt wird oder anhand der übrigen beiden Winkel modelliert werden kann. In diesem Fall kann auf den Drehwinkelsensor 20, 21, 22 für den nicht benötigten oder modellierten Winkel $\delta\_S$, $\delta\_M$, $\delta\_G$ verzichtet werden. Die Drehwinkelsignale $\delta\_S$, $\delta\_M$ und/ oder $\delta\_G$ werden an das Steuergerät 19 geführt. Außerdem liegt an dem Steuergerät 19 ein Geschwindigkeitssignal $V\_x$ an.

Das erfindungsgemäße Verfahren zur Variation der Lenkübersetzung des Lenksystems 1 ist vorzugsweise in Form eines Computerprogramms realisiert, das auf einem Rechengerät 23, insbesondere auf einem Mikroprozessor, des Steuergeräts 19 des Lenksystems 1 ablaufen kann. Das Computerprogramm ist auf einem Speicherelement, insbesondere auf einem elektrischen Speicherelement 24 in Form eines Read-Only-Speichers, Random-Access-Speichers oder Flash-Speichers, abgespeichert. Zur Ausführung des Computerprogramms auf dem Rechengerät 23, wird das Computerprogramm abschnittsweise oder als ganzes über eine Datenverbindung 25 von dem Speicherelement 24 zu dem Rechengerät 23 übertragen. Durch die Abarbeitung des Computerprogramms auf dem Rechengerät 23 wird das erfindungsgemäße Verfahren ausgeführt. Während der Ausführung des Computerprogramms ermittelte oder empfangene Werte können über die Datenverbindung 25 an das Speicherelement 24 übertragen und dort abgespeichert werden.

Das Computerprogramm kann aus dem Internet 26 heruntergeladen und in dem Speicherelement 24 des Steuergeräts 19 abgelegt werden. Alternativ kann das Computerprogramm auch auf einem Speicherelement 27, insbesondere auf einem elektrischen Datenträger (SD-Karte, CF-Karte, etc.), einem magnetischen Datenträger (Diskette, Festplatte, Speicherband, etc.) oder einem optischen Datenträger (CD-ROM, DVD, etc.), abgespeichert sein. Der Inhalt des Datenträgers 27 kann in das Steuergerät 19 eingelesen und in dem Speicherelement 24 des Steuergeräts 19 abgelegt werden.

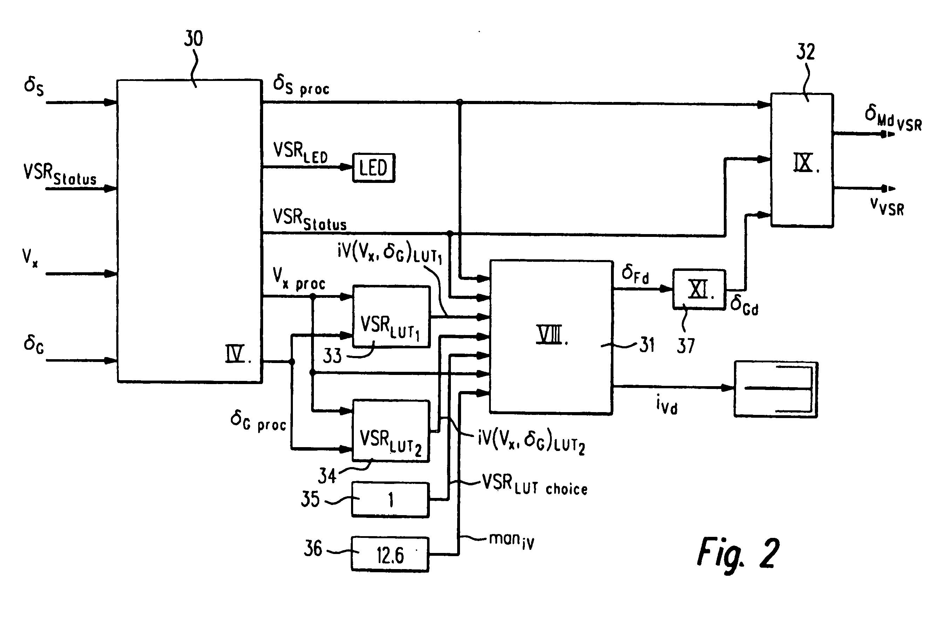

Aufgabe des erfindungsgemäßen Verfahrens ist es, das Übersetzungsverhältnis zwischen dem Lenkradwinkel $\delta\_S$ und dem mittleren Winkel $\delta\_Fm$ der lenkbaren Räder 12, 13 der Fahrsituation anzupassen. Anhand des Blockschaltbilds aus Figur 2 wird das erfindungsgemäße Verfahren näher erläutert. Auf der linken Seite der Figur 2 sind die Funktionseingänge, Lenkradwinkel $\delta\_S$, Status VSR_Status (VSR: variable steering ratio) des Lenksystems 1, Fahrzeuggeschwindigkeit $V\_x$ und Ritzelwinkel $\delta\_C$, angegeben. Auf der rechten Seite sind die Funktionsausgänge, Statussignal VSR_LED, Teilsollwert für den Zusatzwinkel $\delta\_Md\_VSR$ und Versionsnummer $v\_VSR$, angegeben. An dem Steuergerät 19, in dem das erfindungsgemäße Verfahren in Form eines Computerprogramms realisiert ist, ist ein Triggereingang verfügbar. Liegt an diesem eine steigende Flanke an, dann wird die Funktion aus Figur 2 ausgeführt. Die Gesamtstruktur läuft mit einer konstanten Abtastzeit von beispielsweise 1 ms. Ein Signalgenerator (nicht dargestellt) erzeugt am Triggereingang beispielsweise alle 10 ms eine 0/1-Flanke, welche zur Ausführung der Funktion aus Figur 2 führt. Die Funktion wurde für eine konstante Abtastzeit von beispielsweise 10 ms entwickelt, da die Regelung der Lage des Motors 10 nur alle 10 ms einen neuen Sollwert einliest.

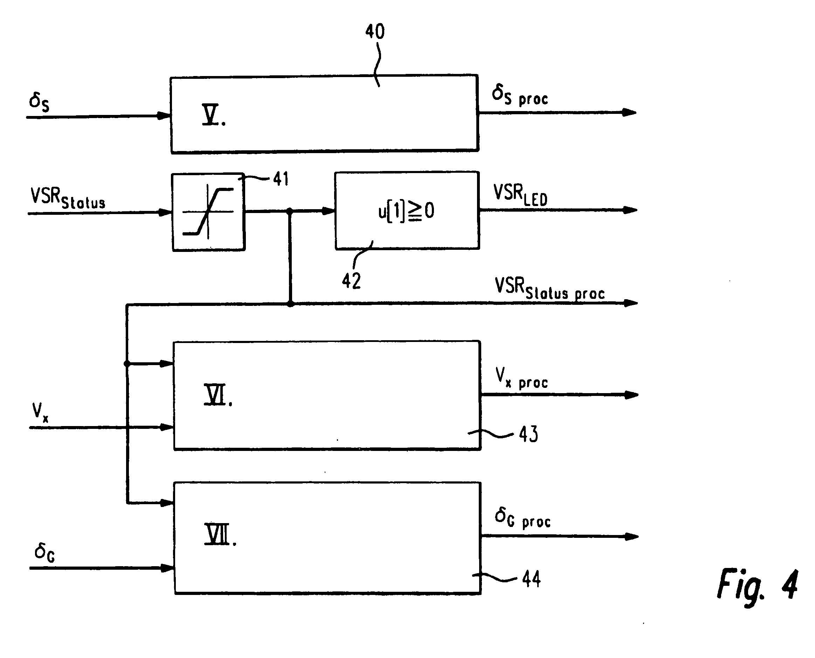

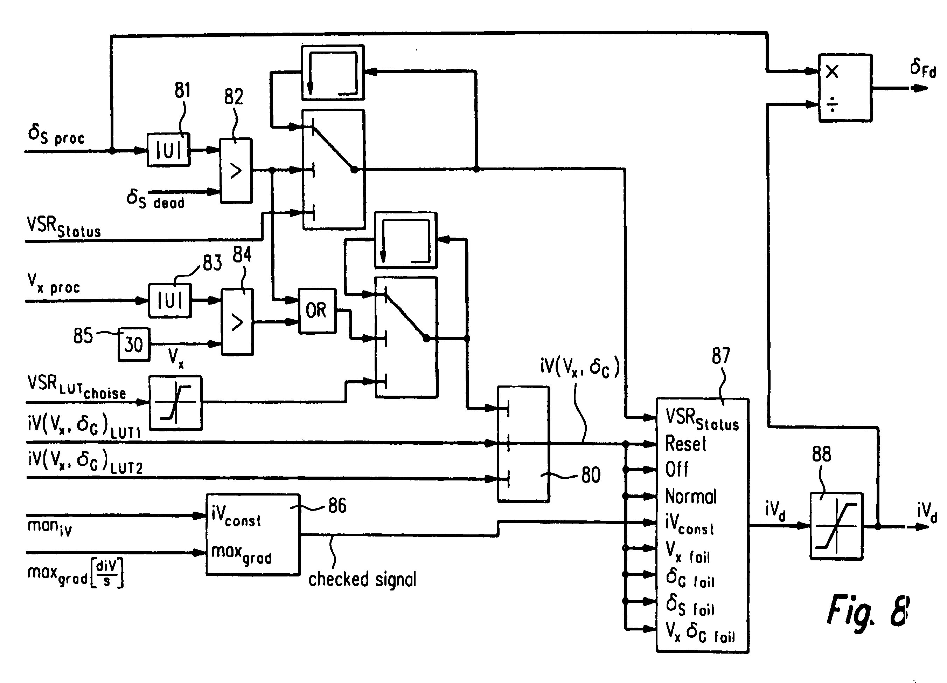

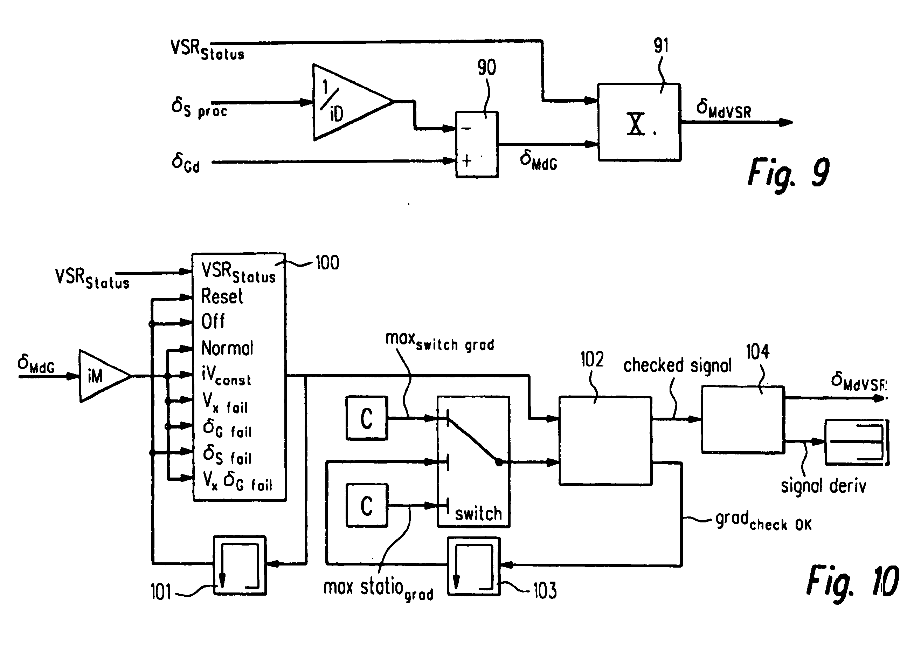

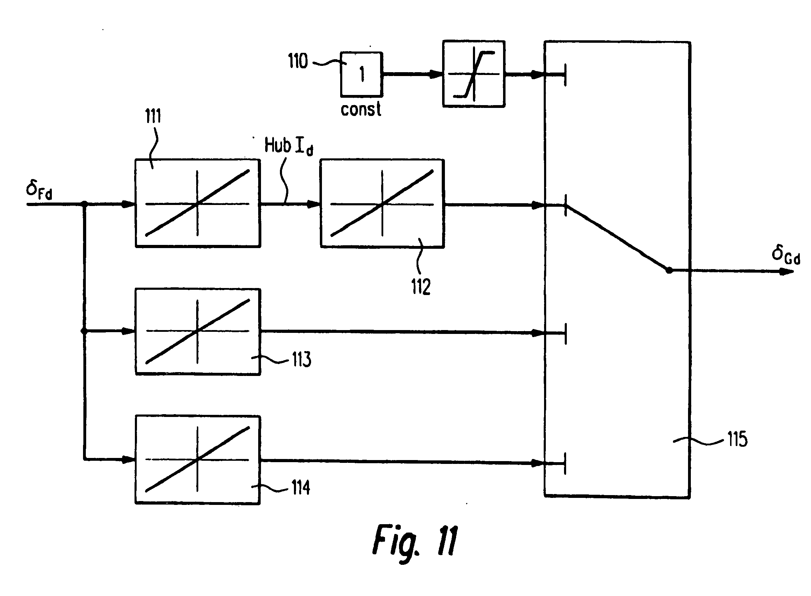

Figur 2 zeigt den Aufbau der Funktion zur variablen Vorgabe der Lenkübersetzung. Im Folgenden werden die einzelnen Teilfunktionen kurz erläutert. Die applizierbaren Kundenparameter werden unter Bezugnahme auf Figur 11 als letzte erläutert. In einer Teilfunktion 30 werden die Signale Fahrzeuggeschwindigkeit $V\_x$, Ritzelwinkel $\delta\_G$ und Lenkradwinkel $\delta\_S$ gefiltert, ihre Gradienten werden überwacht und es werden geeignete Maßnahmen bei Ausfall einzelner Signale eingeleitet. Diese Teilfunktion 30 ist im Detail in Figur 4 dargestellt. In einer Teilfunktion 31 wird anhand der Eingangsgrößen $V\_x$, $\delta\_G$, $\delta\_S$ und des Funktionsstatus VSR_status eine gewünschte Übersetzung $i\_V$ für die weitere Berechnung festgelegt. Diese Teilfunktion 31 ist im Detail in Figur 8 dargestellt. In einer Teilfunktion 32 wird basierend auf einem zuvor berechneten Soll-Ritzelwinkel $\delta\_Gd$ und in Abhängigkeit des Funktionsstatus VSR_status sowie eines gefilterten Lenkradwinkels $\delta\_S\_proc$ (proc: processed = verarbeitet) der Teilsollwert $\delta\_Md\_VSR$ der Funktion aus Figur 2 berechnet. Diese Teilfunktion 32 ist im Detail in Figur 9 dargestellt.

Die mittels der Drehwinkelsensoren 20, 21, 22 gemessenen Eingangssignale Lenkradwinkel $\delta\_S$, Ritzelwinkel $\delta\_G$ und Fahrgeschwindigkeit $V\_x$, sowie der Teilsollwert $\delta\_Md$ für den Zusatzwinkel $\delta\_M$ werden durch ein PT1-Tiefpassfilter (mit einem Ausgang x_fil) geglättet, welches durch folgenden Algorithmus implementiert ist:

$$x_{fil} = \frac{T \cdot K \cdot x(t) + x_{fil}(t-1)}{1 - T \cdot (-K)} \qquad (1)$$

mit einer Abtastzeit T, einem Filterkoeffizienten K, einem aktuellen Signalwert x(t) und einem gefilterten Wert x_fil(t-1) zu einem vorangegangenen Schritt, der zu Beginn auf den Wert Null initialisiert wird.

Bei der Funktion gemäß Figur 2 wird der Teilsollwert δ_Md für den Motorwinkel δ_M vollständig auf Positionsebene berechnet und nicht - wie bisher zum Teil üblich - auf Übersetzungsebene, so dass sich eine höhere Genauigkeit der Berechnung ergibt. Die Grundlage für den Algorithmus der Funktion bildet die kinematische Positionsbeziehung gemäß der Gleichung:

$$\delta_G = \frac{1}{i_M} \cdot \delta_{Md\,VSR} + \frac{1}{i_D} \cdot \delta_S \qquad (2)$$

Der Sollwert δ_Md für den Zusatzwinkel δ_M wird in der Funktion gemäß Figur 2 anhand der Vorgabe einer Sollübersetzung i_Vd zwischen Lenkradwinkel δ_S und mittlerem Vorderradwinkel δ_Fm berechnet. Diese ist folgendermaßen definiert:

$$i_{Vd} = \frac{\delta_S}{\delta_{Fm}} \qquad (3)$$

Dazu ist es erforderlich, dass eine vorzugsweise nicht-lineare Lenkkinematik des Lenkgetriebes 4, das heißt die nicht-lineare Beziehung zwischen Ritzelwinkel δ_G des Lenkgetriebes 4 und mittlerem Vorderradwinkel δ_Fm der Räder 12, 13, berücksichtigt wird. Für diese Beziehung gilt:

$$\delta_G = f_{SG}(\delta_{Fm}) \qquad (4)$$

Durch Umstellung von Gleichung (3) und anschließendes Einsetzen in Gleichung (4) erhält man den Sollwert δ_Gd für den Ritzelwinkel δ_G:

$$\delta_{Gd} = f_{SG}\left(\frac{\delta_S}{i_{Vd}}\right) \qquad (5)$$

Dann wird die Summengleichung (2) nach dem Sollwert δ_Md_VSR des Zusatzwinkels δ_M umgestellt. Als Sollwertvorgabe dient der Ritzelwinkel δ_G:

$$\delta_{Md\,VSR} = i_M \cdot \left(\delta_{Gd} - \frac{1}{i_D} \cdot \delta_S\right) \qquad (6)$$

Durch Einsetzen der Gleichung (5) in die Gleichung (6) erhält man die Beziehung zur Berechnung des Sollwerts für den Zusatzwinkel:

$$\delta_{Md\,VSR} = i_M \cdot \left( f_{SG}\left(\frac{\delta_S}{i_{Vd}}\right) - \frac{1}{i_D} \cdot \delta_S \right) \qquad (7)$$

wobei i_M die Übersetzung zwischen der Lenkhandhabe 2 und der Gelenkwelle 3, i_D die Übersetzung zwischen dem Motor 10 und der Gelenkwelle 3, $\delta$_S den Lenkradwinkel und i_Vd die gewünschte Übersetzung zwischen der Lenkhandhabe 2 und den lenkbaren Rädern 12, 13 darstellt. Außerdem geht zusätzlich der nicht-lineare Zusammenhang zwischen dem Ritzel 8 und den Rädern 12, 13 gemäß Gleichung (4) in die Berechnung ein.

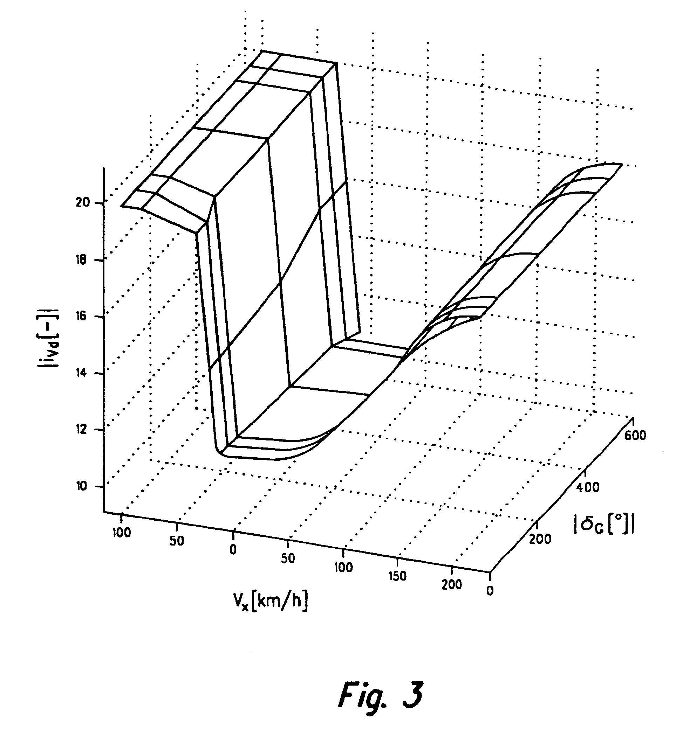

Die Wunschübersetzung i_Vd wird in der Funktion gemäß Figur 2 über ein Kennfeld ermittelt. i_Vd ist dabei abhängig von der aktuellen Fahrzeuggeschwindigkeit V_x und dem momentan vorliegenden Ritzelwinkelbetrag |$\delta$_G|. Ein Beispiel für ein derartiges Kennfeld ist in Figur 3 dargestellt.

Mit einer sogenannten Rekonfigurationsstrategie wird die Funktionalität der Funktion aus Figur 2 in der Weise erweitert, dass bei einem auftretenden Fehler innerhalb eines Eingangsignals $\delta$_G, $\delta$_S oder V_x eine geeignete Notlaufmaßnahme eingeleitet wird, bis das fehlerhafte Signal wieder in Ordnung ist, bzw. bis das Lenksystem 1 abgeschaltet wird. In Abhängigkeit von dem aktuellen Funktionsstatus sind die nachfolgenden Notlaufmodi vorgesehen:

| Funktionsstatus | Notlaufmodus |
|---|---|
| 2 | V_x-Signal fehlerhaft |
| 3 | $\delta$_G-Signal fehlerhaft |
| 4 | $\delta$_S-Signal fehlerhaft |
| 5 | V_x- und $\delta$_G-Signal fehlerhaft |

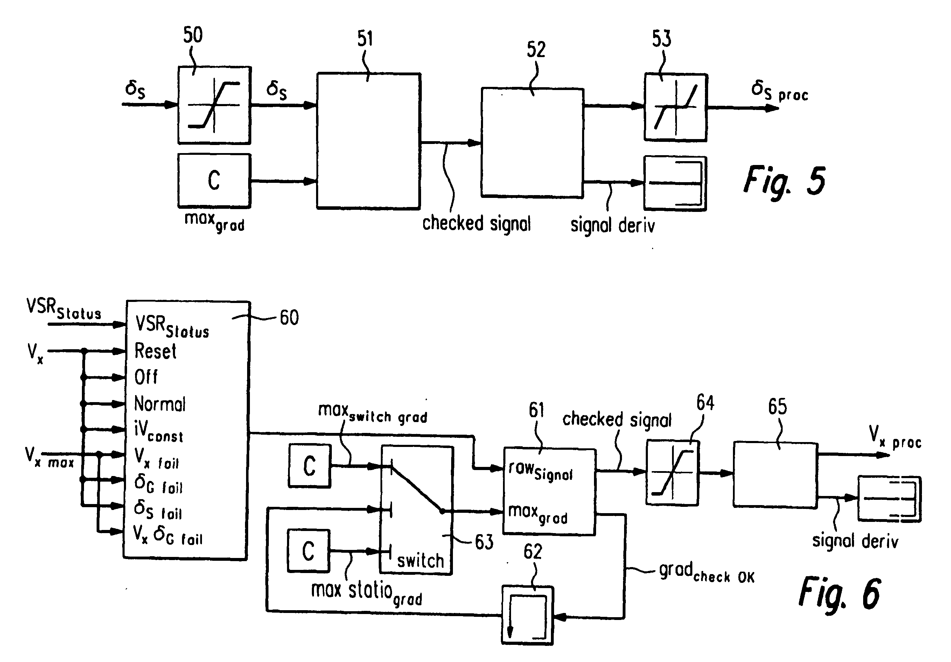

In Figur 4 ist ein Subsystem dargestellt, das die Signalaufbereitung der Eingangsignale enthält. Diese werden im Folgenden erläutert. In einem im Detail in Figur 5 dargestellten ersten Funktionsblock 40 wird zunächst der Lenkradwinkel $\delta$_S auf $\pm 800°$ begrenzt (Funktionsblock 50). Im Anschluss erfolgt in einem Funktionsblock 51 eine Gradientenbegrenzung. Hierbei wird ausgehend von dem parametrierbaren zulässigen Maximalgradienten max_grad die zulässige Änderung pro Abtastschritt ermittelt. Wird diese überschritten, ermittelt die Gradientenbegrenzung den neuen Wert anhand des Wertes aus dem vorigen Schritt und addiert bzw. subtrahiert zu diesem den maximal zulässigen Gradienten max_grad. Das begrenzte Signal (checked signal) wird in einem Funktionsblock 52 durch einen Tiefpassfilter geglättet, welches durch folgenden Algorithmus implementiert ist:

$$x_{fil} = \frac{T \cdot K \cdot x(t) + x_{fil}(t-1)}{1 - T \cdot (-K)} \qquad (8)$$

mit einer Abtastzeit T, einem Filterkoeffizienten K, einem aktuellen Signalwert x(t) und einem gefilterten Wert x_fil(t-1) zu einem vorangegangenen Schritt, der zu Beginn auf den Wert Null initialisiert wird.

Am Ende der Signalaufbereitung wird der Lenkradwinkel $\delta$_S in einem Funktionsblock 53 mit einer Totzone um die Nulllage der Lenkung gedämpft.

In der Funktion aus Figur 4 wird der Funktionsstatus in einem Funktionsblock 41 begrenzt, beispielsweise auf einen zulässigen Wertebereich von -2 bis +5. Der Funktionsblock 42 schaltet die VSR_LED (light emitting diode) aktiv, wenn der Funktionsstatus VSR_status größer oder gleich Null ist.

Anderenfalls bleibt die LED aus. Selbstverständlich kann die Erfindung auch ohne die LED realisiert werden.

Die Signalaufbereitung der Fahrzeuggeschwindigkeit V_x erfolgt in einem Funktionsblock 43, der im Detail in Figur 6 dargestellt ist. Zu Beginn wird in einem Auswahlblock 60 abhängig von dem anliegenden Funktionsstatus VSR_status zwischen dem Sensorsignal V_x und einem konstanten Wert V_x_max umgeschaltet. Wird ein Fehler in dem Geschwindigkeitssignal V_x detektiert, wird der Funktionsstatus VSR_status umgeschaltet, so dass eine sichere Rückfallebene eingenommen werden kann.

Im Anschluss erfolgt in einem Funktionsblock 61 eine Gradientenüberwachung. Wird ein maximal zulässiger Gradientenwert max_grad überschritten, wird dies als ein Wechsel des Funktionsstatus VSR_status gewertet. Mit einem Abtastschritt Verzögerung (Funktionsblock 62) wird der maximal zulässige Gradient grad_check_OK in einem Funktionsblock 63 auf einen kleineren Wert geändert. Dadurch wird der durch den Statuswechsel hervorgerufene Sprung im Sensorsignal vermieden und der neue Sollwert allmählich angefahren.

Dann erfolgt in einem Funktionsblock 64 eine Begrenzung des Signals V_x mit abschließender Tiefpassfilterung in einem Funktionsblock 65. Der Algorithmus für das Tiefpassfilter wurde gemäß Gleichung (8) implementiert, jedoch mit einem andern Filterkoeffizienten.

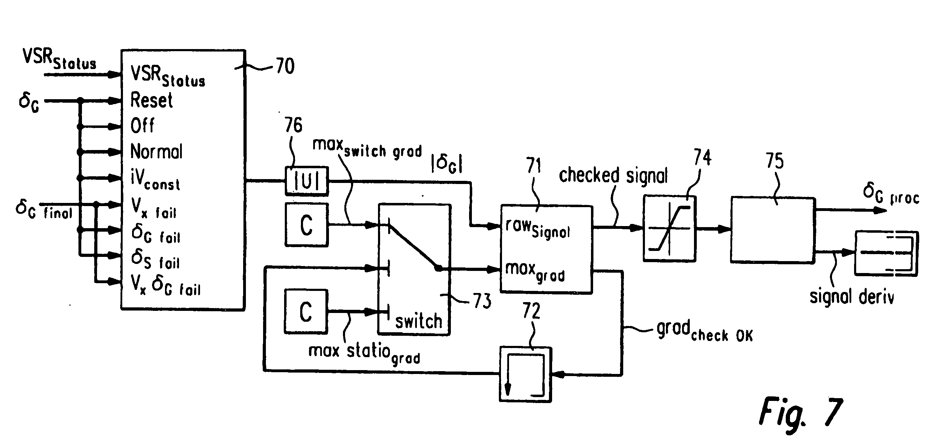

Die Signalaufbereitung des Ritzelwinkels δ_G erfolgt bei der Funktion aus Figur 4 in einem Funktionsblock 44, der in Figur 7 im Detail dargestellt ist. Prinzipiell ist die Signalaufbereitung des Ritzelwinkels δ_G identisch mit der Aufbereitung der Fahrzeuggeschwindigkeit V x. Mit dem Bezugszeichen 70 ist ein Schaltelement zum Umschalten zwischen dem Sensorsignal δ_G und einem konstanten Wert δ_G_final abhängig von dem anliegenden Funktionsstatus VSR_status bezeichnet. Funktionsblock 71 ist eine Gradientenüberwachung, und Bezugszeichen 72 ist ein Verzögerungselement zur Verzögerung des maximal zulässigen Gradienten grad_check_OK um einen Abtastschritt. In einem Funktionsblock 73 wird der verzögerte maximal zulässige Gradient grad_check_OK auf einen kleineren Wert geändert. In einem Funktionsblock 74 erfolgt eine Begrenzung des Signals δ_G (bzw. checked signal) und in einem Funktionsblock 75 eine abschließende Tiefpassfilterung. Zusätzlich wurde in einem Funktionsblock 76 eine Betragsbildung des Signals δ_G eingeführt, da der Ritzelwinkel δ_G für die weitere Verarbeitung nur in absoluter Form genutzt wird.

In dem Subsystem 31 der Funktion aus Figur 2, das in Figur 8 im Detail dargestellt ist, wird abhängig von dem Funktionsstatus VSR_status, dem Lenkradwinkel δ_S und der Fahrzeuggeschwindigkeit V_x eine Umschaltung (Funktionsblock 80) zwischen den zwei VSR-Kennfeldern VSR_LUT_1 und VSR_LUT_2 und einer Konstantvorgabe man_i_V der Lenkübersetzung i_V zugelassen bzw. verhindert.

Eine Umschaltung zwischen variabler Lenkübersetzung und Konstantvorgabe ist gemäß Figur 8 nur dann möglich, wenn der Betrag (Funktionsblock 81) des aufbereiteten Lenkradwinkels δ_S_proc kleiner als (Funktionsblock 82) ein definierter Wert (δ_S_dead) ist, das heißt beim Lenken um die Nulllage.

Eine Umschaltung zwischen den zwei möglichen Kennfeldern wird erst aktiv, wenn die genannte Bedingung erfüllt ist und der Betrag (Funktionsblock 83) der Fahrzeuggeschwindigkeit V_x kleiner (Funktionsblock 84) als ein vorgebbarer Wert (Funktionsblock 85), beispielsweise 30 km/h, ist. Das heißt, falls bei einer Geschwindigkeit von beispielsweise 80 km/h von dem Kennfeld VSR_LUT_1 auf das Kennfeld VSR_LUT_2 umgeschaltet wird, wird das neue Kennfeld VSR_LUT_2 erst aktiv, wenn die Fahrzeuggeschwindigkeit V_x kleiner als 30 km/h ist und um die Mittellage der Lenkung gelenkt wird. In einem Modus mit konstanter Lenkübersetzung i_V_const wird eine sprunghafte Änderung des manuell vorgegebenen Werts für die Lenkübersetzung man_i_V durch eine Gradientenbegrenzung in einem Funktionsblock 86 vermieden.

Ein Funktionsblock 87 dient lediglich zur Unterscheidung zwischen den verschiedenen Modi variable bzw. konstante Lenkübersetzungsvorgabe. Die aus der Vorverarbeitung gewählte Sollübersetzung i_Vd wird im Anschluss begrenzt (Funktionsblock 88) beispielsweise auf Werte zwischen 8 und 21 und danach ausgegeben. Der Quotient aus aufbereitetem Lenkradwinkel δ_S_proc und Sollübersetzung i_Vd liefert den mittleren Sollwert δ_Fd für den Lenkwinkel δ_F der lenkbaren Räder 12, 13.

In dem Funktionsblock 32, der in Figur 9 im Detail dargestellt ist, erfolgt basierend auf dem zuvor aufbereiteten Lenkradwinkel δ_S_proc und dem aus der Lenkkinematik-Kennlinie stammenden Sollwert δ_Gd für den Ritzelwinkel δ_G die Ermittlung (Funktionsblock 90) des Sollwerts δ_Md_G für den Zusatzwinkel δ_M in Bezug auf den Ritzelwinkel δ_G. In einem nachgeschalteten Funktionsblock 91, der im Detail in Figur 10 dargestellt ist, wird der Teilsollwert δ_Md_G für den Motorwinkel δ_M zunächst auf die Motorebene δ_Md_VSR bezogen.

Ein Schaltelement in Funktionsblock 100 dient zur Umschaltung zwischen den verschiedenen Funktionsstati. Falls der Lenkradwinkel δ_S fehlerhaft ist oder falls die Funktion abgeschaltet wird, dann wird der Sollwert aus dem vorigen Ablaufschritt (Funktionsblock 101) eingefroren. Die nachfolgende Gradientenprüfung in Funktionsblock 102 übernimmt wiederum die Aufgabe, Funktionsstatuswechsel wahrzunehmen (Wahrnehmung erfolgt mit einem Ablaufschritt verzögert (Funktionsblock 103)) und bei solchen den zulässigen Gradienten zu verkleinern, um Sprünge in dem Sollsignal δ_Md zu vermeiden. Lenkt man zum Beispiel zum Rechtsanschlag, schaltet die Funktion ab, lenkt man anschließend zum linken Anschlag und schaltet die Funktion dann wieder aktiv, würde dann ohne diese Gradientenbegrenzung ein Sprung im Motorsollwert δ_Md auftreten. Die abschließende Tiefpassfilterung in einem Funktionsblock 104 dient zur Glättung des Sollsignals und ist - mit Ausnahme des Filterkoeffizienten - analog zu den anderen Filtern der Funktion gemäß Figur 2 implementiert.

Teil der in Figur 2 dargestellten Funktion sind außer den bereits oben erläuterten vorgegebenen Funktionsblöcken auch für den Kunden applizierbare Parameter. Diese umfassen ein erstes zweidimensionales Kennfeld (sogenannter Look-up-Table 1, LUT_1) 33 und ein zweites zweidimensionales Kennfeld (sogenannter Look-up-Table 2, LUT_2) 34. In dem ersten Kennfeld VSR_LUT_1 sind die nachfolgenden Parameter enthalten, welche in einer Parameter-Datei definiert werden:

VSR_LUT_1_Vx:       Eingangsvektor Fahrzeuggeschwindigkeit

**EP 1 568 576 B1**

(fortgesetzt)

| VSR_LUT_1_$\delta$_G: | Eingangsvektor Ritzelwinkelbetrag |
| VSR_LUT_1_i_Vd: | Sollübersetzung |

Die aus dem Kennfeld 33 ermittelte Sollübersetzung wird in dem Subsystem 31 (vergleiche Figur 8) auf Werte zwischen 8 und 21 begrenzt.

In dem zweiten Kennfeld VSR_LUT_2 sind die nachfolgenden Parameter enthalten, welche in einer Parameter-Datei definiert werden:

| VSR_LUT_2_Vx: | Eingangsvektor Fahrzeuggeschwindigkeit |
| VSR_LUT_2_$\delta$_G: | Eingangsvektor Ritzelwinkelbetrag |
| VSR_LUT_2_i_Vd: | Sollübersetzung |

Die aus dem Kennfeld 34 ermittelte Sollübersetzung wird in dem Subsystem 31 (vergleiche Figur 8) auf Werte zwischen 8 und 20 begrenzt.

Eine Konstante VSR_LUT_choice aus einem Funktionsblock 35 dient zur Auswahl des gewünschten VSR-Kennfeldes 33 oder 34 und wird im nachfolgenden Block 31 (vergleiche Figur 8) auf die Werte und 2 begrenzt.

Eine Konstante man_iV aus einem Funktionsblock 36 dient zur Vorgabe einer konstanten Sollübersetzung i_Vd. Diese wird aktiv, wenn der Funktionsstatus VSR_status in den Konstant-Modus umgeschaltet wird, das heißt wenn der Funktionseingang VSR_status auf den Wert 1 gesetzt wird.

Eine Lenkkinematikbeziehung zwischen dem Ritzelwinkel $\delta$_G und dem mittleren Winkel $\delta$_Fm der lenkbaren Räder 12, 13 ist in einem Funktionsblock 37 enthalten und im Detail in Figur 11 dargestellt. Diese Beziehung wird im Vorfeld anhand einer Achsvermessung geschätzt oder gemessen. In dem in Figur 11 dargestellten Subsystem sind drei Auswahlmöglichkeiten enthalten, zwischen welchen über einen Konstant-Block 110 mittels eines Schaltelements 115 umgeschaltet werden kann. Die erste Auswahlmöglichkeit umfasst zwei hintereinander geschaltete Kennlinien 111 und 112. Hierbei stellt der Block 111 den Zusammenhang zwischen dem mittlerem Vorderradwinkel $\delta$_Fm und einem Hub Hub_I_d der Zahnstange 7 her. Der nachgeschaltete Block 112 enthält theoretisch vorliegende Daten der Zahnstange 7. Hierdurch besteht die Möglichkeit, mit einem geringen Aufwand andere Zahnstangenübersetzungen zu implementieren.

Die zweite Auswahlmöglichkeit enthält in einem Funktionsblock 113 die aus der Achsvermessung ermittelte Beziehung zwischen mittlerem Vorderradwinkel $\delta$_Fm und Ritzelwinkel $\delta$_G. Diese Auswahl ist genauer als die erste, jedoch nicht so flexibel auf Änderungen an der Zahnstange 7 anpassbar.

In der letzten Auswahlmöglichkeit wurde aus der Achsvermessung ein linearer Zusammenhang zwischen dem mittleren Radwinkel $\delta$_Fm und dem Ritzelwinkel $\delta$_G geschätzt bzw. ermittelt und in einem Funktionsblock 114 abgelegt. Diese Möglichkeit kann genutzt werden, falls die konstruktiv vorliegende Übersetzung i_V zwischen Ritzel 8 und lenkbarem Rad 12, 13 beibehalten werden soll. In diesem Fall weicht die tatsächliche Lenkübersetzung i_V deutlicher von der vorgegebenen Sollübersetzung i_Vd ab.

**Patentansprüche**

1. Lenksystem (1) eines Kraftfahrzeugs, mit einer Lenkhandhabe (2) zur Vorgabe eines Lenkradwinkels ($\delta$_S) als Maß für einen gewünschten Lenkwinkel ($\delta$_F) für mindestens ein lenkbares Rad (12, 13) des Kraftfahrzeugs, mit Überlagerungsmitteln (9) zum Generieren eines Zusatzwinkels ($\delta$_M) und zur Überlagerung des Lenkradwinkels ($\delta$_S) mit dem Zusatzwinkel ($\delta$_M), wobei sich ein Ritzelwinkel ($\delta$_G) aus der Summe des Lenkradwinkels ($\delta$_S) und des Zusatzwinkels ($\delta$_M) ergibt, und mit einem Lenkgetriebe (4) zur Umsetzung des Ritzelwinkels ($\delta$_G) in einen korrigierten Lenkwinkel ($\delta$_F) für das mindestens eine lenkbare Rad (12, 13) des Kraftfahrzeugs, **dadurch gekennzeichnet, dass** die Überlagerungsmittel (9) den Zusatzwinkel ($\delta$_M) in Abhängigkeit von einer anhand von einer oder mehreren geeigneten Betriebsgrößen des Kraftfahrzeugs ermittelbaren aktuellen Fahrsituation des Kraftfahrzeugs, ausgenommen von der Fahrgeschwindigkeit (V_x) des Kraftfahrzeugs, und in Abhängigkeit von einer im Vorfeld anhand einer Achsvermessung ermittelten nicht-linearen Lenkkinematikbeziehung (37) des Lenkgetriebes (4) generieren.

2. Lenksystem (1) nach Anspruch 1, **dadurch gekennzeichnet, dass** das Lenksystem (1) Mittel (19) zur Ermittlung der aktuellen Fahrsituation des Kraftfahrzeugs anhand einer die Drehzahl (n_12, n_13) von mindestens einem Rad (12, 13) des Kraftfahrzeugs charakterisierenden Größe aufweist.

3. Lenksystem (1) nach Anspruch 1 oder 2, **dadurch gekennzeichnet, dass** die Überlagerungsmittel (9) den Zusatzwinkel ($\delta$_M) in Abhängigkeit von einer den Lenkradwinkel ($\delta$_S) charakterisierenden Größe generieren.

4. Lenksystem (1) nach einem der Ansprüche 1 bis 3, **dadurch gekennzeichnet, dass** die Überlagerungsmittel (9) den Zusatzwinkel ($\delta$_M) in Abhängigkeit von einer die Drehgeschwindigkeit ($\dot{\delta}s$) der Lenkhandhabe (2) charakterisierenden Größe generieren.

5. Lenksystem (1) nach einem der Ansprüche 1 bis 4, **dadurch gekennzeichnet, dass** das Lenksystem (1) Mittel (19) zur Ausführung einer durch Filterkoeffizienten definierten Filterung der zur Ermittlung der aktuellen Fahrsituation des Kraftfahrzeugs herangezogenen Größen (n_12, n_13), der den Ritzelwinkel ($\delta$_G) charakterisierenden Größe und/ oder der die Drehgeschwindigkeit ($\dot{\delta}_S$) der Lenkhandhabe (2) charakterisierenden Größe aufweist, wobei die Filterkoeffizienten in Abhängigkeit von dynamischen Eigenschaften des Kraftfahrzeugs fahrzeugspezifisch vorgebbar sind.

6. Lenksystem (1) nach einem der Ansprüche 1 bis 5, **dadurch gekennzeichnet, dass** das Lenksystem (1) Mittel (19) zur Detektion eines Fehlers der zur Ermittlung der aktuellen Fahrsituation des Kraftfahrzeugs herangezogenen Größen (n_12, n_13), der den Ritzelwinkel ($\delta$_G) charakterisierenden Größe und/ oder der die Drehgeschwindigkeit ($\dot{\delta}s$) der Lenkhandhabe (2) charakterisierenden Größe aufweist, wobei im Falle der Detektion eines Fehlers statt der fehlerhaften Größe ($\delta$_G) eine vorgebbare Ersatzgröße ($\delta$_G_final) zum Generieren des Zusatzwinkels ($\delta$_M) herangezogen wird.

7. Lenksystem (1) nach Anspruch 6, **dadurch gekennzeichnet, dass** die Mittel (19) zur Detektion eines Fehlers der zur Ermittlung der aktuellen Fahrsituation des Kraftfahrzeugs herangezogenen Größen (n_12, n_13), der den Ritzelwinkel ($\delta$_G) charakterisierenden Größe und/ oder der die Drehgeschwindigkeit ($\dot{\delta}_S$) der Lenkhandhabe (2) charakterisierenden Größe im Falle der Detektion einer fehlerfreien Größe ($\delta$_G) statt der Ersatzgröße ($\delta$_G_final) wieder die fehlerfreie Größe ($\delta$_G) zum Generieren des Zusatzwinkels ($\delta$_M) heranziehen.

8. Lenksystem (1) nach einem der Ansprüche 1 bis 7, **dadurch gekennzeichnet, dass** die Überlagerungsmittel (9) einen Elektromotor (10) zum Generieren des Zusatzwinkels ($\delta$_M) und ein Überlagerungsgetriebe (11) zum Überlagern des Lenkradwinkels ($\delta$_S) mit dem Zusatzwinkel ($\delta$_M) aufweist, wobei der Motor (10) im Bereich eines Anschlags des Lenkgetriebes (4) einer vorgebbaren Funktion folgend auf Null gefahren wird.

9. Lenksystem (1) nach einem der Ansprüche 1 bis 8, **dadurch gekennzeichnet, dass** das Lenksystem (1) einen Servoantrieb (14) zur Momentenunterstützung aufweist.

10. Lenksystem (1) nach Anspruch 9, **dadurch gekennzeichnet, dass** der Grad der Momentenunterstützung von der Fahrgeschwindigkeit (V_x) des Kraftfahrzeugs abhängig ist.

11. Verfahren zum Betrieb eines Lenksystems (1) eines Kraftfahrzeugs, bei dem mittels einer Lenkhandhabe (2) ein Lenkradwinkel ($\delta$_S) als Maß für einen gewünschten Lenkwinkel ($\delta$_F) für mindestens ein lenkbares Rad (12, 13) des Kraftfahrzeugs vorgegeben wird, bei dem ein Zusatzwinkel ($\delta$_M) generiert und zur Ermittlung eines Ritzelwinkels ($\delta$_G) dem Lenkradwinkel ($\delta$_S) überlagert wird, und bei dem der Ritzelwinkel ($\delta$_G) in einen korrigierten Lenkwinkel ($\delta$_F) für das mindestens eine lenkbare Rad (12, 13) des Kraftfahrzeugs umgesetzt wird, **dadurch gekennzeichnet, dass** der Ritzelwinkel ($\delta$_G) von einem Lenkgetriebe (4) in den korrigierten Lenkwinkel ($\delta$_F) für das mindestens eine lenkbare Rad (12, 13) des Kraftfahrzeugs umgesetzt wird und dass der Zusatzwinkel ($\delta$_M) in Abhängigkeit von einer anhand von einer oder mehreren geeigneten Betriebsgrößen des Kraftfahrzeugs ermittelbaren aktuellen Fahrsituation des Kraftfahrzeugs, ausgenommen von der Fahrgeschwindigkeit (V_x) des Kraftfahrzeugs, und in Abhängigkeit von einer im Vorfeld anhand einer Achsvermessung ermittelten nicht-linearen Lenkkinematikbeziehung (37) des Lenkgetriebes (4) generiert wird.

12. Verfahren nach Anspruch 11, **dadurch gekennzeichnet, dass** der Zusatzwinkel ($\delta$_M) in Abhängigkeit von einer die Drehgeschwindigkeit der Lenkhandhabe (2) charakterisierenden Größe generiert wird.

13. Computerprogramm, das auf einem Rechengerät (23), insbesondere auf einem Mikroprozessor, eines Steuergeräts (19) für ein Lenksystem (1) eines Kraftfahrzeugs ablauffähig ist, **dadurch gekennzeichnet, dass** das Computerprogramm zur Ausführung eines Verfahrens nach einem der Patentansprüche 11 oder 12 programmiert ist.

14. Computerprogramm nach Anspruch 13, **dadurch gekennzeichnet, dass** das Computerprogramm auf einem Spei-

**EP 1 568 576 B1**

cherelement (24, 27) abgespeichert ist.

**Claims**

1.  Steering system (1) of a motor vehicle, having a steering handle (2) for stipulating a steering-wheel angle ($\delta$_S) as a measure of a desired steering angle ($\delta$_F) for at least one steerable wheel (12, 13) of the motor vehicle, having superimposition means (9) for generating an additional angle ($\delta$_M) and for superimposing the steering-wheel angle ($\delta$_S) with the additional angle ($\delta$_M), a pinion angle ($\delta$_G) resulting from the sum of the steering-wheel angle ($\delta$_S) and the additional angle ($\delta$_M), and having a steering gear (4) for converting the pinion angle ($\delta$_G) into a corrected steering angle ($\delta$_F) for the at least one steerable wheel (12, 13) of the motor vehicle, **characterized in that** the superimposition means (9) generate the additional angle ($\delta$_M) as a function of a current driving situation of the motor vehicle which can be determined using one or more suitable operating variables of the motor vehicle, except for the driving speed (V_x) of the motor vehicle, and as a function of a non-linear steering-kinematics relationship (37) of the steering gear (4) which is determined in advance using an axle measurement.

2.  Steering system (1) according to Claim 1, **characterized in that** the steering system (1) has means (19) for determining the current driving situation of the motor vehicle using a variable which characterizes the rotational speed (n_12, n_13) of at least one wheel (12, 13) of the motor vehicle.

3.  Steering system (1) according to Claim 1 or 2, **characterized in that** the superimposition means (9) generate the additional angle ($\delta$_M) as a function of a variable which characterizes the steering-wheel angle ($\delta$_S).

4.  Steering system (1) according to one of Claims 1 to 3, **characterized in that** the superimposition means (9) generate the additional angle ($\delta$_M) as a function of a variable which characterizes the rotary speed ($\dot{\delta}_S$) of the steering handle (2).

5.  Steering system (1) according to one of Claims 1 to 4, **characterized in that** the steering system (1) has means (19) for performing filtering, which is defined by filter coefficients, of the variables (n_12, n_13) which are used for determining the current driving situation of the motor vehicle, the variable which characterizes the pinion angle ($\delta$_G) and/or the variable which characterizes the rotary speed ($\dot{\delta}_S$) of the steering handle (2), it being possible for the filter coefficients to be stipulated in a vehicle-specific manner as a function of dynamic properties of the motor vehicle.

6.  Steering system (1) according to one of Claims 1 to 5, **characterized in that** the steering system (1) has means (19) for detecting an error in the variables (n_12, n_13) which are used for determining the current driving situation of the motor vehicle, the variable which characterizes the pinion angle ($\delta$_G) and/or the variable which characterizes the rotary speed ($\dot{\delta}_S$) of the steering handle (2), a predefinable replacement variable ($\delta$_G_final) being used instead of the erroneous variable ($\delta$_G) for generating the additional angle ($\delta$_M) if an error is detected.

7.  Steering system (1) according to Claim 6, **characterized in that** the means (19) for detecting an error in the variables (n_12, n_13) which are used for determining the current driving situation of the motor vehicle, the variable which characterizes the pinion angle ($\delta$_G) and/or the variable which characterizes the rotary speed (&) of the steering handle (2) use the error-free variable ($\delta$_G) again instead of the replacement variable ($\delta$_G_final) for generating the additional angle ($\delta$_M) if an error-free variable ($\delta$_G) is detected.

8.  Steering system (1) according to one of Claims 1 to 7, **characterized in that** the superimposition means (9) has an electric motor (10) for generating the additional angle ($\delta$_M) and a variable-ratio gear unit (11) for superimposing the steering-wheel angle ($\delta$_S) with the additional angle ($\delta$_M), the motor (10) being set to zero in the region of a stop of the steering gear (4) in a manner which follows a predefinable function.

9.  Steering system (1) according to one of Claims 1 to 8, **characterized in that** the steering system (1) has a servo drive (14) for moment assistance.

10. Steering system (1) according to Claim 9, **characterized in that** the degree of moment assistance is dependent on the driving speed (V_x) of the motor vehicle.

11. Method for operating a steering system (1) of a motor vehicle, in which a steering-wheel angle ($\delta$_S) is stipulated by a steering handle (2) as a measure of a desired steering angle ($\delta$_F) for at least one steerable wheel (12, 13) of the motor vehicle, in which an additional angle ($\delta$_M) is generated and is superimposed on the steering-wheel angle ($\delta$_S) for determining a pinion angle ($\delta$_G), and in which the pinion angle ($\delta$_G) is converted into a corrected steering angle ($\delta$_F) for the at least one steerable wheel (12, 13) of the motor vehicle, **characterized in that** the pinion angle ($\delta$_G) is converted by a steering gear (4) into the corrected steering angle ($\delta$_F) for the at least one steerable wheel (12, 13) of the motor vehicle, and **in that** the additional angle ($\delta$_M) is generated as a function of a current driving situation of the motor vehicle which can be determined using one or more suitable operating variables of the motor vehicle, except for the driving speed (V_x) of the motor vehicle, and as a function of a non-linear steering-kinematics relationship (37) of the steering gear (4) which is determined in advance using an axle measurement.

**12.** Method according to Claim 11, **characterized in that** the additional angle ($\delta$_M) is generated as a function of a variable which characterizes the rotary speed of the steering handle (2).

**13.** Computer program which can run on a computing unit (23), in particular on a microprocessor, of a control unit (19) for a steering system (1) of a motor vehicle, **characterized in that** the computer program is programmed for carrying out a method according to either of Patent Claims 11 and 12.

**14.** Computer program according to Claim 13, **characterized in that** the computer program is stored on a memory element (24, 27).

## Revendications

**1.** Système de direction (1) d'un véhicule automobile, comprenant une manette de direction (2) pour prédéfinir un angle de roue orientable ($\delta$_S) comme cote pour un angle de direction ($\delta$_F) souhaité pour au moins une roue orientable (12, 13) du véhicule automobile, comprenant des moyens de superposition (9) destinés à générer un angle supplémentaire ($\delta$_M) et à superposer l'angle de roue orientable ($\delta$_S) à l'angle supplémentaire ($\delta$_M), un angle de pignon ($\delta$_G) résulte de la somme de l'angle de roue orientable ($\delta$_S) et de l'angle supplémentaire ($\delta$_M), et comprenant un mécanisme de direction (4) pour convertir l'angle de pignon ($\delta$_G) en un angle de direction corrigé ($\delta$_F) pour l'au moins une roue orientable (12, 13) du véhicule automobile, **caractérisé en ce que** les moyens de superposition (9) génèrent l'angle supplémentaire ($\delta$_M) en fonction d'une situation de conduite actuelle du véhicule automobile, pouvant être déterminée au moyen d'une ou plusieurs grandeurs opérationnelles appropriées du véhicule automobile, à l'exception de la vitesse de déplacement (V_x) du véhicule automobile, et en fonction d'une relation cinématique de direction (37) non linéaire du mécanisme de direction (4) déterminée à l'avance au moyen d'une mesure d'axe.

**2.** Système de direction (1) selon la revendication 1, **caractérisé en ce que** le système de direction (1) présente des moyens (19) pour déterminer la situation de conduite actuelle du véhicule automobile au moyen d'une grandeur caractérisant la vitesse de rotation (n_12, n_13) d'au moins une roue (12, 13) du véhicule automobile.

**3.** Système de direction (1) selon la revendication 1 ou 2, **caractérisé en ce que** les moyens de superposition (9) génèrent l'angle supplémentaire ($\delta$_M) en fonction d'une grandeur caractérisant l'angle de roue orientable ($\delta$_S).

**4.** Système de direction (1) selon l'une des revendications 1 à 3, **caractérisé en ce que** les moyens de superposition (9) génèrent l'angle supplémentaire ($\delta$_M) en fonction d'une grandeur caractérisant la vitesse de rotation ($\delta_s$) de la manette de direction (2).

**5.** Système de direction (1) selon l'une des revendications 1 à 4, **caractérisé en ce que** le système de direction (1) présente des moyens (19) pour exécuter un filtrage défini par des coefficients de filtrage des grandeurs (n_12, n_13) utilisées pour la détermination de la situation de conduite actuelle du véhicule automobile, de la grandeur caractérisant l'angle de pignon ($\delta$_G) et/ou la grandeur caractérisant la vitesse de rotation ($\delta_s$) de la manette de direction (2), les coefficients de filtrage pouvant être prédéfinis spécifiquement au véhicule en fonction des propriétés dynamiques du véhicule automobile.

**6.** Système de direction (1) selon l'une des revendications 1 à 5, **caractérisé en ce que** le système de direction (1) présente des moyens (19) pour détecter une erreur des grandeurs (n_12, n_13) utilisées pour la détermination de la situation de conduite actuelle du véhicule automobile, de la grandeur caractérisant l'angle de pignon ($\delta$_G) et/ou de la grandeur caractérisant la vitesse de rotation ($\delta_s$) de la manette de direction (2), une grandeur de substitution ($\delta$_G_final) pouvant être prédéfinie étant utilisée à la place de la grandeur ($\delta$_G) erronée pour générer l'angle

supplémentaire ($\delta$_M) en cas de détection d'une erreur.

**7.** Système de direction (1) selon la revendication 6, **caractérisé en ce que** les moyens (19) pour détecter une erreur des grandeurs (n_12, n_13) utilisées pour la détermination de la situation de conduite actuelle du véhicule automobile, de la grandeur caractérisant l'angle de pignon ($\delta$_G) et/ou de la grandeur caractérisant la vitesse de rotation ($\delta_s$) de la manette de direction (2), en cas de détection d'une grandeur ($\delta$_G) non erronée, utilisent de nouveau la grandeur ($\delta$_G) non erronée pour générer l'angle supplémentaire ($\delta$_M) à la place de la grandeur de substitution ($\delta$_G_final).

**8.** Système de direction (1) selon l'une des revendications 1 à 7, **caractérisé en ce que** les moyens de superposition (9) présentent un moteur électrique (10) pour générer l'angle supplémentaire ($\delta$_M) et un engrenage de superposition (11) pour superposer l'angle de roue orientable ($\delta$_S) à l'angle supplémentaire ($\delta$_M), le moteur (10), dans la zone d'une butée du mécanisme de direction (4), étant amené à zéro en suivant une fonction pouvant être prédéfinie.

**9.** Système de direction (1) selon l'une des revendications 1 à 8, **caractérisé en ce que** le système de direction (1) présente un servomoteur (14) d'assistance du moment.

**10.** Système de direction (1) selon la revendication 9, **caractérisé en ce que** le degré d'assistance du moment dépend de la vitesse de déplacement (V_x) du véhicule automobile.

**11.** Procédé de fonctionnement d'un système de direction (1) d'un véhicule automobile, avec lequel un angle de roue orientable ($\delta$_S) faisant office de cote pour un angle de direction ($\delta$_F) souhaité pour au moins une roue orientable (12, 13) du véhicule automobile est prédéfini au moyen d'une manette de direction (2), avec lequel un angle supplémentaire ($\delta$_M) est généré et superposé à l'angle de roue orientable ($\delta$_S) pour déterminer un angle de pignon ($\delta$_G) et avec lequel l'angle de pignon ($\delta$_G) est converti en un angle de direction corrigé ($\delta$_F) pour l'au moins une roue orientable (12, 13) du véhicule automobile, **caractérisé en ce que** l'angle de pignon ($\delta$_G) est converti en l'angle de direction corrigé ($\delta$_F) pour l'au moins une roue orientable (12, 13) du véhicule automobile par un mécanisme de direction (4) et que l'angle supplémentaire ($\delta$_M) est généré en fonction d'une situation de conduite actuelle du véhicule automobile, pouvant être déterminée au moyen d'une ou plusieurs grandeurs opérationnelles appropriées du véhicule automobile, à l'exception de la vitesse de déplacement (V_x) du véhicule automobile, et en fonction d'une relation cinématique de direction (37) non linéaire du mécanisme de direction (4) déterminée à l'avance au moyen d'une mesure d'axe.

**12.** Procédé selon la revendication 11, **caractérisé en ce que** l'angle supplémentaire ($\delta$_M) est généré en fonction d'une grandeur caractérisant la vitesse de rotation ($\delta_s$) de la manette de direction (2).

**13.** Programme informatique pouvant être exécuté sur un calculateur (23), notamment sur un microprocesseur, un appareil de commande (19) pour un système de direction (1) d'un véhicule automobile, **caractérisé en ce que** le programme informatique est programmé pour exécuter un procédé selon l'une des revendications 11 ou 12.

**14.** Programme informatique selon la revendication 13, **caractérisé en ce que** le programme informatique est mémorisé sur un élément de mémoire (24, 27).

*Fig. 1*

Fig. 2

EP 1 568 576 B1

Fig. 3

*Fig. 4*

EP 1 568 576 B1

Fig. 5

Fig. 6

Fig. 7

EP 1 568 576 B1

Fig. 8

EP 1 568 576 B1

EP 1 568 576 B1

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4031316 A1
- DE 10013711 A1

- US 6226579 B1